# EUROPÄISCHE PATENTSCHRIFT

(11) **EP 3 556 556 B1**
(45) Veröffentlichungstag und Bekanntmachung des Hinweises auf die Patenterteilung: **24.03.2021**
(21) Anmeldenummer: 19168635.1
(22) Anmeldetag: 11.04.2019
(51) Int. Cl.: B32B 39/00, B32B 41/00, B32B 38/18, B29C 63/02

(54) **BESCHICHTUNGSVORRICHTUNG**
COATING DEVICE
DISPOSITIF DE REVÊTEMENT

(30) Priorität: 17.04.2018 DE 102018205803
(43) Veröffentlichungstag der Anmeldung: 23.10.2019
(73) Patentinhaber: HOMAG GmbH, 72296 Schopfloch (DE)
(72) Erfinder: Huber, Reinhard, 72250 Freudenstadt (DE)
(74) Vertreter: Hoffmann Eitle

(56) Entgegenhaltungen:
- DE-B3- 10 335 693
- DE-U1-202013 102 624
- US-A1- 2016 279 915

## Beschreibung

### Technisches Gebiet

Die Erfindung betrifft eine Beschichtungsvorrichtung, die geeignet ist, ein Beschichtungsmaterial auf einem, insbesondere plattenförmigen, Werkstück aufzubringen. Insbesondere ist die Beschichtungsvorrichtung eingerichtet, ein Beschichtungsmaterial an einer Breitfläche eines Werkstücks anzubringen.

Derartige Werkstücke können aus Holz, Holzwerkstoffen, und/oder Verbundmaterial gefertigt sein. Bei einem solchen Werkstück kann es sich bspw. um eine Küchenarbeitsplatte, um eine Möbelfront, um ein Einlagebrett, oder ähnliches handeln. Ferner betrifft die Erfindung ein Verfahren zum Beschichten eines Werkstücks.

### Stand der Technik

Es sind Beschichtungsvorrichtungen bekannt, bei denen ein Werkstück im Durchlauf mit einem Beschichtungsmaterial versehen wird. Entlang der Förderstrecke ist eine stationär angeordnete Haftauftragseinrichtung vorgesehen, mit der ein Werkstück zunächst mit einem Haftmittel versehen wird. Nachfolgend durchläuft das mit Haftmittel versehene Werkstück eine Presse, in der ein zugeschnittenes Beschichtungsmaterial zugeführt und mittels einer Kalanderwalze auf das Werkstück aufgepresst wird.

Derartige Durchlaufmaschinen sind für große Stückzahlen geeignet, hatten jedoch den Nachteil, dass diese einen relativ großen Platz in der Fertigungshalle einnehmen. Ferner ist ein Wechsel zwischen unterschiedlichen Beschichtungsmaterialien nicht ohne weiteres möglich

Aus DE 20 2013 102 624 U1, US 2016/0279915 A1 und DE 103 35 693 B3 sind weitere Beschichtungsvorrichtungen nach dem Stand der Technik bekannt.

### Gegenstand der Erfindung

Es ist ein Ziel der Erfindung, eine Beschichtungsvorrichtung bereitzustellen, die neben einer kompakten Bauweise ferner ein hohes Maß an Flexibilität gewährleistet.

Der Gegenstand des Anspruchs 1 stellt eine entsprechende Beschichtungsvorrichtung bereit. Weitere bevorzugte Ausführungsformen sind in den abhängigen Ansprüchen aufgeführt. Ferner betrifft die Erfindung ein Verfahren. Merkmale einzelner abhängiger Vorrichtungsansprüche können jeweils im Rahmen des Verfahrens zum Einsatz kommen. Ebenso kann die Vorrichtung eingerichtet sein, Merkmale einzelner Verfahrensansprüche umzusetzen.

Der Erfindung liegt der Gedanke zu Grunde, eine Beschichtungsvorrichtung bereitzustellen, mit der auch zumindest zeitweise gehaltene Werkstücke mit einem Beschichtungsmaterial versehen werden können.

Die Beschichtungsvorrichtung, die insbesondere zum Aufbringen eines Beschichtungsmaterials an einer Breitfläche/Breitseite eines Werkstücks geeignet ist, weist auf: Eine Auflageeinrichtung zum Aufnehmen eines Werkstücks, eine rollbare Auflegevorrichtung zum Auflegen eines Beschichtungsmaterials auf das Werkstück, und eine Presseinrichtung zum Anpressen des Beschichtungsmaterials an dem an der Auflageeinrichtung aufgenommenen Werkstück. Ferner ist die Presseinrichtung zum Anpressen des Beschichtungsmaterials entlang der Auflageeinrichtung bewegbar.

Die erfindungsgemäße Beschichtungsvorrichtung stellt eine platzsparende Konstruktion bereit, die ein hohes Maß an Fertigungsqualität gewährleistet. Insbesondere werden Blasen vermieden und eine hohe Kantengenauigkeit beim Aufbringen des Beschichtungsmaterials erreicht.

Es ist bevorzugt, dass die Auflegevorrichtung, seitlich betrachtet, gegenüber der Auflageeinrichtung, auf der das Werkstück aufgenommen ist, eine schräge oder geneigte Ebene ausbildet. Durch die definierte Neigung der Auflegevorrichtung, mit der ein Beschichtungsmaterial einem mit Haftmittel versehenen Werkstück zugeführt werden kann, wird das Auftreten von Luftblasen zwischen dem Beschichtungsmaterial und dem Werkstück verhindert.

Gemäß einer bevorzugten Ausführungsform ist es vorgesehen, dass die Auflegevorrichtung in ein Gehäuse einrollbar ist. Somit kann die Auflegevorrichtung in platzsparender Weise vorgehalten werden. Ferner wird ein platzsparendes Liegen des Beschichtungsmaterials während der Beschichtung gewährleistet.

Die Presseinrichtung kann relativ zur Auflageeinrichtung anhebbar und absenkbar sein. Somit kann die Presseinrichtung auf sich ändernde Randbedingungen reagieren und entsprechend der jeweiligen Werkstückdicke verstellt werden.

In diesem Zusammenhang ist es weiter bevorzugt, dass zum Anheben oder Absenken eine pneumatisch betriebene oder hydraulisch betriebene Einrichtung vorgesehen ist. Eine pneumatisch betriebene Einrichtung ist relativ kostengünstig und führt somit zu reduzierten Gesamtkosten. Eine hydraulisch betriebene Einrichtung bietet ein erhöhtes Maß an Präzision.

Ferner kann die Beschichtungsvorrichtung eine Haftmittelauftragseinrichtung zum Auftragen eines Haftmittels am Werkstück aufweisen, so dass der Haftmittelauftrag und das Aufbringen eines Beschichtungsmaterials an einem Werkstück in einer Vorrichtung zusammengefasst werden.

Die Haftmittelauftragseinrichtung kann eine Plattenreinigungseinheit aufweisen.

Eine Auftragswalze der Haftmittelauftragseinrichtung ist bevorzugt derart ausgebildet, dass das Haftmittel durch die Auftragswalze auf der Breitfläche eines insbesondere plattenförmigen Werkstücks aufgebracht werden kann.

Dabei ist es bevorzugt, dass die Haftmittelauftragseinrichtung benachbart zur Auflageeinrichtung angeordnet ist, um eine platzsparende Anordnung bereitzustellen.

Es kann vorgesehen sein, dass die Haftmittelauftragseinrichtung entlang der Auflageeinrichtung bewegbar ist. Auf diese Weise ist es möglich, dass das Werkstück während des Haftmittelauftrags stationär gehalten werden kann. Insbesondere kann das Werkstück an der Breitseite gehalten werden, die nicht zu beschichten ist. Ferner kann selektiv ein Haftmittel oder ein Beschichtungsmaterial aufgebracht, oder beide Vorgänge an einem Werkstück durchgeführt werden.

Durch die Bewegbarkeit der Presseinrichtung und der Haftmittelauftragseinrichtung entlang der Auflageeinrichtung kann auf geringstem Platz ein Werkstück verarbeitet werden. Insbesondere sind ein Haftmittelauftrag und ein Aufbringen eines Beschichtungsmaterials kurz hintereinander möglich. Das Werkstück kann währenddessen an einer Position bleiben.

Beispielsweise kann folgender Verfahrensablauf umgesetzt werden: Auflegen des zu beschichtenden Werkstücks und ggf. Fixieren des Werkstücks, hiernach Bewegen der Haftmittelauftragseinrichtung über das Werkstück.

Zum Zurückfahren kann die Haftmittelauftragseinrichtung ausgehoben werden und zur Ausgangsposition zurück bewegt werden. Danach kann die rollbare Auflegevorrichtung über das mit Haftmittel versehene Werkstück gespannt werden. Nachfolgend wird darauf ein Beschichtungsmaterial aufgelegt und ausgerichtet. Nachdem die Längskante des Beschichtungsmaterials auf das Werkstück angedrückt worden ist und kantengenau liegt, zieht sich die einrollbare Auflegevorrichtung zurück.

Das ruhende Werkstück, welches mit Haftmittel versehen wurde, als auch das bereits anhaftende Laminat bleiben zurück, und werden zusammengefügt. Danach bewegt sich die Presseinrichtung horizontal über das Beschichtungsmaterial und das darunter liegende Werkstück. Der abrollende Walzendruck drückt dieses gleichmäßig auf das Substrat.

In diesem Zusammenhang kann vorgesehen sein, dass die Haftmittelauftragseinrichtung relativ zur Auflageeinrichtung anhebbar oder absenkbar ist. In diesem Zusammenhang ist es weiter bevorzugt, dass zum Anheben oder Absenken eine pneumatisch betriebene oder hydraulisch betriebene Einrichtung vorgesehen ist. Eine pneumatisch betriebene Einrichtung ist relativ kostengünstig und führt somit zu reduzierten Gesamtkosten. Eine hydraulisch betriebene Einrichtung bietet ein erhöhtes Maß an Präzision.

In einer Variante ist es vorgesehen, dass die Auflegevorrichtung mit der Haftmittelauftragseinrichtung und der Presseinrichtung in Verbindung steht. Somit wird eine kompakte und gleichzeitig flexible Anordnung bereitgestellt, die insbesondere bei einem zumindest zeitweise stationär gehaltenen Werkstück vorteilhaft ist.

In einer Ausführungsform ist es vorgesehen, dass die Auflageeinrichtung eine Fördereinrichtung zum Bewegen des Werkstücks umfasst. Das Werkstück kann damit zu einer vorgesehenen Position bewegt und nachfolgend beschichtet werden. Ferner ist es möglich, das Werkstück nach dem Beschichten von der Beschichtungsvorrichtung auszufördern.

Die Beschichtungsvorrichtung kann ferner eine Wendevorrichtung umfassen, die eingerichtet ist, ein Werkstück um 180° zu drehen, insbesondere von einer ersten Breitfläche zu einer zweiten Breitfläche.

In diesem Zusammenhang ist es ferner bevorzugt, dass die Wendevorrichtung eingerichtet ist, das Werkstück in Richtung der Haftmittelauftragseinrichtung zu bewegen. Somit kann das Werkstück, das an einer Seite mit einem Haftmittel und ggf. mit einer Beschichtung an der mit Haftmittel beaufschlagten Seite versehen wurde, von einer Breitfläche zur weiteren Breitfläche umgedreht werden, so dass eine Bearbeitung gemäß einem der vorangegangenen Aspekte an der weiteren Breitfläche des Werkstücks durchgeführt werden kann. Dies führt zu einem zügigen Verfahrensablauf und vermeidet Stillstandzeiten der Vorrichtung. Durch die Integration der Wendevorrichtung in die zuvor genannte Vorrichtung wird eine platzsparende Konstruktion bereitgestellt, wobei durch die Möglichkeit des zügigen Wechsels der Werkstückseite durch ein Wenden mit der Wendevorrichtung eine hohe Bearbeitungsqualität gewährleistet wird.

Die Erfindung betrifft ferner ein Verfahren zum Beschichten eines, insbesondere plattenförmigen, Werkstücks mit einem Beschichtungsmaterial, insbesondere einer Folie. Insbesondere wird das Beschichtungsmaterial auf eine Breitfläche des Werkstücks aufgebracht.

Das Verfahren umfasst dabei die Schritte: Auflegen des Beschichtungsmaterials auf eine rollbare Auflegevorrichtung, und
Anpressen des Beschichtungsmaterials an dem Werkstück mittels einer Presseinrichtung, während die Presseinrichtung entlang des Werkstücks bewegt wird. Bezüglich der Vorteile des Verfahrens wird auf die zur Vorrichtung bereits erläuterten Vorteile verwiesen.

Insbesondere wird im Rahmen des Verfahrens das Beschichtungsmaterial an einer Breitfläche/Breitseite des Werkstücks aufgebracht.

Es ist bevorzugt, dass die Auflegevorrichtung mit der Presseinrichtung in Verbindung steht und während des Bewegens der Presseinrichtung in ein Gehäuse eingerollt wird. Somit kann die Auflegevorrichtung in platzsparender Weise vorgehalten werden. Ferner wird ein platzsparendes Liegen des Beschichtungsmaterials während der Beschichtung gewährleistet.

Es kann vorgesehen sein, dass vor dem Beschichten des Werkstücks ein Haftmittel am Werkstück mittels einer Haftmittelauftragseinrichtung aufgetragen wird, wobei das Werkstück und/oder die Haftmittelauftragseinrichtung zum Auftragen des Haftmittels bewegt wird/werden.

Das Werkstück kann zumindest abschnittsweise aus Holz, Holzwerkstoff oder Verbundmaterial gefertigt sein.

In einer Ausführungsform ist es vorgesehen, dass das mit dem Beschichtungsmaterial versehene Werkstück mittels einer Wendevorrichtung um 180° gedreht wird. Somit kann das Werkstück, das an einer Seite mit einem Haftmittel und ggf. mit einer Beschichtung an der mit Haftmittel beaufschlagten Seite versehen wurde, von einer Breitfläche zur weiteren Breitfläche umgedreht werden.

Merkmale der zuvor genannten Vorrichtung können jeweils einzeln im Rahmen des Verfahrens zum Einsatz kommen. Auch kann die Vorrichtung eingerichtet sein, Merkmale des Verfahrens jeweils einzeln umzusetzen.

### Kurze Beschreibung der Zeichnungen

- Fig. 1a: zeigt eine erste Ausführungsform der Erfindung in einem ersten Betriebszustand vor dem Aufbringen eines Beschichtungsmaterials.
- Fig. 1b: zeigt die Beschichtungsvorrichtung gemäß der ersten Ausführungsform während des Aufbringens eines Beschichtungsmaterials.
- Fig. 1c: zeigt die Vorrichtung gemäß der ersten Ausführungsform nach dem Aufbringen des Beschichtungsmaterials.
- Fig. 2a: ist eine schematische Ansicht einer zweiten Ausführungsform vor dem Beschichten eines Werkstücks.
- Fig. 2b: zeigt die Beschichtungsvorrichtung gemäß der zweiten Ausführungsform während des Haftmittelauftrags.
- Fig. 3a: zeigt die Beschichtungsvorrichtung gemäß der zweiten Ausführungsform während des Aufbringens des Beschichtungsmaterials.
- Fig. 3b: ist eine schematische Ansicht der Beschichtungsvorrichtung gemäß der zweiten Ausführungsform nach dem Aufbringen des Beschichtungsmaterials.
- Fig. 4a: ist eine schematische Ansicht einer Wendevorrichtung, die mit einer der zuvor genannten Ausführungsformen zum Einsatz kommen kann.
- Fig. 4b: ist eine schematische Ansicht der Wendevorrichtung gemäß Fig. 4a, bei der ein gedrehtes Werkstück ausgefördert wird.

### Detaillierte Beschreibung der bevorzugten Ausführungsformen

Anhand der beigefügten Figuren werden bevorzugte Ausführungsformen der Erfindung beschrieben, um die Erfindung anhand anschaulicher, jedoch nicht einschränkender Beispiele zu erläutern. Merkmale der Ausführungsformen oder Modifikationen von Einzelmerkmalen können kombiniert werden, um weitere Ausführungsformen auszubilden.

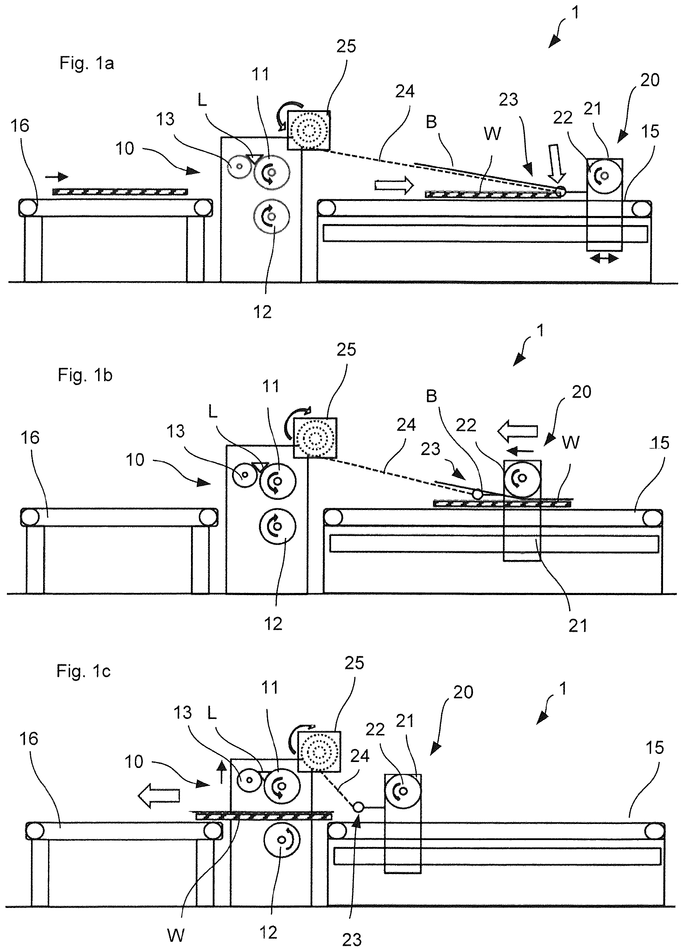

Die Beschichtungsvorrichtung 1 gemäß der in den Figuren 1a-1c dargestellten ersten Ausführungsform umfasst einen Einlauf 16, mit dem ein Werkstück W den nachfolgend näher beschriebenen Bearbeitungsvorgängen zugeführt wird. Ferner umfasst die Beschichtungsvorrichtung 1 eine Auflageeinrichtung 15, auf der das Werkstück zeitweise festgelegt werden kann. Beispielsweise wird das Werkstück W mittels Vakuum angesaugt oder mit Greifern oder Klemmbacken an der Auflageeinrichtung 15 gehalten.

Zwischen dem Einlauf 16 und der Auflageeinrichtung 15 ist eine Haftmittelauftragseinrichtung 10 vorgesehen. Die Haftmittelauftragseinrichtung 10 umfasst eine Andruckwalze 11, die insbesondere eine gummierte Oberfläche aufweist. Benachbart zur Andruckwalze 11 ist eine Dosierwalze 13 als eine Ausführungsform einer Dosiereinrichtung vorgesehen, die einen kleineren Durchmesser aufweist als die Andruckwalze 11.

Die Andruckwalze 11 und die Dosierwalze 13 berühren sich oder sind in derart unmittelbarer Nähe zueinander angeordnet, dass zwischen der Andruckwalze 11 und der Dosierwalze 13 ein Leimreservat L ausgebildet ist. Das Leimreservat L in dem sich verjüngenden Spalt zwischen der Andruckwalze 11 und der Dosierwalze 13 wird seitlich durch Segmente (nicht dargestellt) begrenzt, sodass ein zugeführtes Haftmittel im Bereich zwischen der Andruckwalze 11 und der Dosierwalze 13 im Leimreservat L verbleibt.

Die Andruckwalze 11 dreht sich in der vorliegenden Ausführungsform entgegen des Uhrzeigersinns und wird während der Drehbewegung mit dem Haftmittel auf dem Leimreservat L benetzt.

In vertikaler Richtung unterhalb der Andruckwalze 11 ist eine Gegendruckwalze 12 vorgesehen. Zwischen der Andruckwalze 11 und der Gegendruckwalze 12 wird ein Spalt ausgebildet, durch den ein Werkstück W hindurchgeführt werden kann.

Entlang der Auflagevorrichtung 15 ist eine Presseinrichtung 20 bewegbar. Die Presseinrichtung 20 weist ein Gehäuse 21 auf, das eine Anpresswalze 22 aufnimmt. Die Anpresswalze 22 ist oberhalb der Auflagefläche der Auflageeinrichtung 15 vorgesehen, sodass mit der Anpresswalze 22, wie nachfolgend erläutert, ein Beschichtungsmaterial an einem an der Auflageeinrichtung 15 aufgelegten Werkstück W angepresst werden kann.

An der Haftmittelauftragseinrichtung 10 ist ein Gehäuse 25 der aufrollbaren Legevorrichtung vorgesehen. Im Gehäuse 25 wird eine Auflegevorrichtung 24 aufgerollt, welche Auflegevorrichtung 24 mit der bewegbaren Presseinrichtung 20 verbunden ist.

Da das Gehäuse 25 der aufrollbaren Legevorrichtung in vertikaler Richtung betrachtet höher angeordnet ist als der Anbindungspunkt der Auflegevorrichtung 24 an der bewegbaren Presseinrichtung 20, wird durch die Auflegevorrichtung 24 im ausgerollten Zustand eine geneigte Ebene ausgebildet, auf der ein Beschichtungsmaterial B aufgelegt werden kann.

Ein Verfahrensablauf der Beschichtungsvorrichtung 1 der ersten Ausführungsform wird wie folgt erläutert.

Zunächst wird ein Werkstück W vom Einlauf 16 in Richtung der Auflageeinrichtung 15 bewegt. Hierbei gelangt das Werkstück W in den Spalt zwischen der Auftragswalze 11 und der Gegendruckwalze 12. Da die Auftragswalze 11 an der oberen Breitfläche/Breitseite des Werkstücks W abrollt, wird im Zuge dessen ein Haftmittel auf der Breitfläche des Werkstücks W aufgetragen.

Nachdem das Werkstück W in den Bereich der Auflageeinrichtung 15 gelangt ist, wird das Werkstück W zeitweise gehalten. Dies kann durch einen an der unteren Seite des Werkstücks aufgebrachten Unterdruck, eine Klemmeinrichtung, eine haftende Oberfläche an der Auflageeinrichtung 15 oder Ähnliches erreicht werden. Der Auflagebereich 23 der Presseinrichtung 20 wird an einem Endbereich des Werkstücks W herangeführt und im Bereich des Auflagebereichs 23 ein an der Auflegevorrichtung 24 vorgesehenes Beschichtungsmaterial B aufgelegt (Fig. 1a). Das Beschichtungsmaterial kann dabei manuell oder mittels einer Zuführeinrichtung zur Auflagevorrichtung 24 bereitgestellt werden.

Nachfolgend wird die Presseinrichtung 20 entlang der Auflageeinrichtung 15 geführt, sodass die Anpresswalze 22 auf der oberen Seite des Werkstücks W abrollt und im Zuge dessen das Beschichtungsmaterial B an die obere Seite des Werkstücks W anpresst.

Während der Bewegung der Presseinrichtung 20 entlang des an der Auflegeeinrichtung 15 gehaltenen Werkstücks W wird die Auflagevorrichtung 24 in das Gehäuse der aufrollbaren Legevorrichtung 25 eingerollt. Somit wird die Auflegevorrichtung 24 in einem gespannten Zustand gehalten.

Nachdem die Presseinrichtung 20 entlang des an der Auflageeinrichtung 15 gehaltenen Werkstücks bewegt wurde, und somit das Beschichtungsmaterial B am Werkstück W aufgetragen wurde, wird die Presseinrichtung 20, oder die Anpresseinrichtung 22 der Presseinrichtung 20, in vertikaler Richtung angehoben. Somit kann das Werkstück W gemäß der Ausführungsform in Richtung des Einlaufs 16 zurückgeführt werden und vom Einlauf 16 entnommen werden. Alternativ ist es auch möglich, das Werkstück an der zum Einlauf 16 entgegengesetzten Seite der Auflageeinrichtung 15 oder seitlich hiervon abzunehmen.

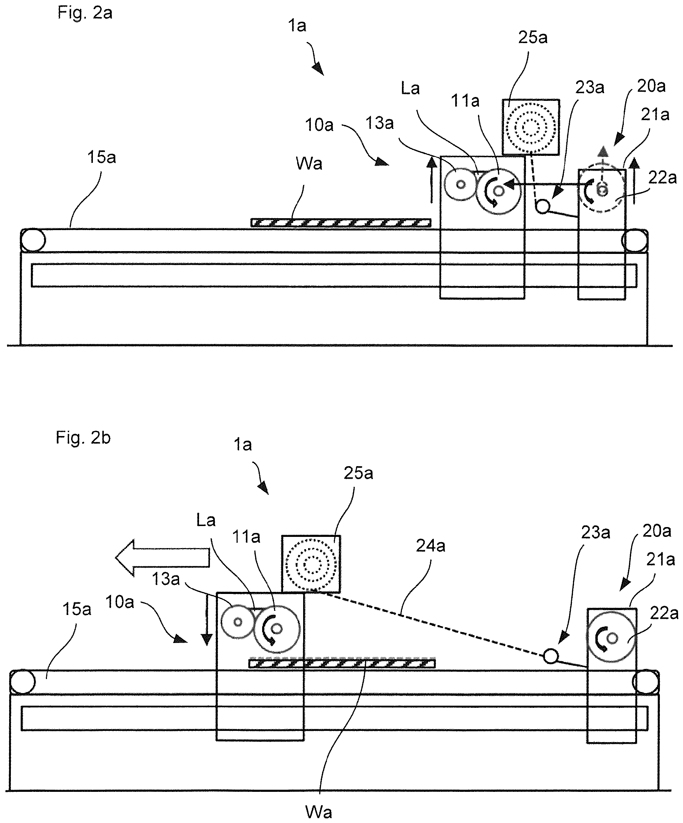

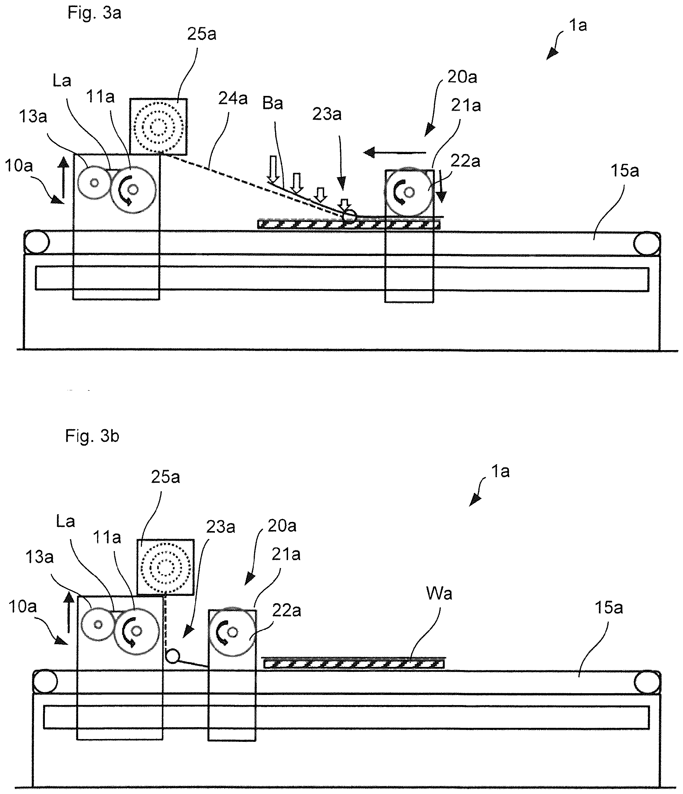

In den Figuren 2a, 2b und 3a, 3b wird eine zweite Ausführungsform dargestellt. Die Vorrichtung der zweiten Ausführungsform unterscheidet sich dadurch von der Vorrichtung der ersten Ausführungsform, dass die Haftmittelauftragseinrichtung 10a der zweiten Ausführungsform entlang der Auflageeinrichtung 15a bewegbar ist. Somit ist sowohl die Auflageeinrichtung 10a als auch die Presseinrichtung 20a bewegbar. Zur Erläuterung der übrigen Elemente der Beschichtungsvorrichtung 1a der zweiten Ausführungsform wird auch auf die obigen Erläuterungen zur ersten Ausführungsform verwiesen, um Wiederholungen zu vermeiden.

Die Haftmittelauftragseinrichtung 10a umfasst eine Auftragswalze 11a sowie eine Dosierwalze 13a (Dosiereinrichtung), die benachbart zueinander angeordnet sind, um in dem sich verjüngenden Spalt zwischen der Auftragswalze 11a und der Dosierwalze 13a ein Haftmittelreservoir La auszubilden. Die Haftmittelauftragseinrichtung 10a ist entlang einer Auflageeinrichtung 15a der Beschichtungsvorrichtung 1a bewegbar. Darüber hinaus kann die Haftmittelauftragseinrichtung 10a in vertikaler Richtung angehoben oder abgesenkt werden, um die Auftragswalze 11a der Auflageseite der Auflageeinrichtung 15a anzunähern oder von dieser zu entfernen.

Die Presseinrichtung 20a ist ähnlich wie die Presseinrichtung 20 der ersten Ausführungsform ausgebildet und umfasst ein Gehäuse 21a, eine Anpresswalze 22a sowie einen Auflagebereich 23a.

An der Haftmittelauftragseinrichtung 10a ist ein Gehäuse 25a der aufrollbaren Legevorrichtung vorgesehen. Die Auflegevorrichtung 24, die im Gehäuse 25a aufgerollt werden kann, ist mit dem Auflagebereich 23a der Pressenrichtung 20a verbunden.

Nachfolgend wird ein Verfahrensablauf der Beschichtungsvorrichtung 1a der zweiten Ausführungsform erläutert.

Zunächst wird ein Werkstück Wa an der Auflageeinrichtung 15a aufgelegt oder in den Bereich der Auflageeinrichtung 15a gefördert. Das Werkstück Wa wird, ähnlich wie in der ersten Ausführungsform, an der Auflageeinrichtung 15a temporär gehalten.

Die Haftmittelauftragseinrichtung 10a wird ggf. angehoben oder abgesenkt, um die Auftragswalze 11a an der Dicke des an der Auflageeinrichtung 15a aufgelegten Werkstücks Wa auszurichten. Die Auftragswalze 11a dreht sich dabei entgegen des Uhrzeigersinns und wird während dieser Drehbewegung aus dem Haftmittelreservoir La mit einem Haftmittel benetzt.

Während die Presseinrichtung 20a zunächst in einer Position gehalten wird, wird die Haftmittelauftragseinrichtung 10a entlang des Werkstücks Wa bewegt, sodass die an der oberen

Seite des Werkstücks Wa abrollende Auftragswalze 11a ein Haftmittel auf der oberen Seite des Werkstücks Wa aufbringt. Während der Bewegung der Haftmittelauftragseinrichtung 10a wird die Auflegevorrichtung 24a aus dem Gehäuse 25a ausgerollt, sodass diese eine geneigte Auflageebene ausbildet (Fig. 2b).

Auf die Auflegevorrichtung 24a wird ein Beschichtungsmaterial Ba aufgebracht, das über den Auflegebereich 23a der Presseinrichtung 20a an der oberen Seite des Werkstücks Wa angelegt und durch ein Bewegen der Presseinrichtung 20a entlang des Werkstücks Wa mittels der Anpresswalze 22a am Werkstück aufgepresst wird. Während der Bewegung der Presseinrichtung 20a wird die Auflegevorrichtung 24a wieder in das Gehäuse 25a eingerollt, sodass die Auflegevorrichtung 24a in einem gespannten Zustand gehalten wird.

Nachdem die Presseinrichtung 20a entlang des Werkstücks Wa geführt wurde und das Beschichtungsmaterial Ba an der oberen Seite des Werkstücks Wa aufgebracht wurde (Fig. 3b), kann das Werkstück von der Auflageeinrichtung 15a entnommen oder mittels einer an der Auflageeinrichtung 15a vorgesehenen Fördereinrichtung aus dem Bereich der Auflageeinrichtung 15a herausgefördert werden.

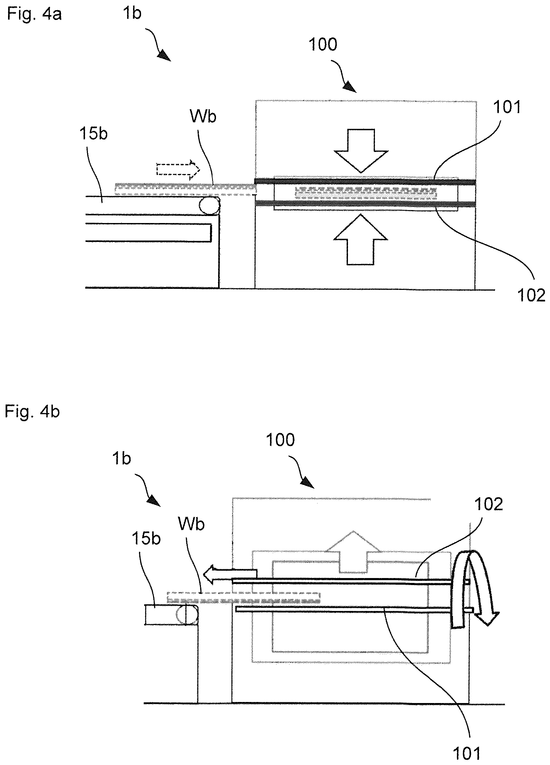

In Figuren 4a und 4b ist eine weitere Ausführungsform der Vorrichtung dargestellt, die ähnlich wie die Vorrichtung 1 oder die Vorrichtung 1a eine Auflageeinrichtung 15b aufweist. Bezüglich weiterer Elemente der Vorrichtung 1b, insbesondere der Haftmittelauftragseinrichtung, wird auf die Vorrichtung 1 oder 1a verwiesen, die zur besseren Übersichtlichkeit in den Zeichnungen weggelassen wurden. Allerdings kann die Vorrichtung 1b wie die Vorrichtung 1 oder 1a ausgebildet sein oder Merkmale hiervon ausweisen.

Zusätzlich weist die Vorrichtung 1b eine Wendevorrichtung 100 auf, mit der ein Werkstück Wb um 180° gedreht werden kann.

Hierzu wird das Werkstück von der Auflageeinrichtung 15b zur Wendevorrichtung 100 bewegt, so dass das Werkstück Wb zwischen die Halteelemente 101, 102 der Wendevorrichtung 100 gelangt. Die Halteelemente 101, 102 sind relativ zueinander bewegbar, um das Werkstück Wb zu klemmen.

Nachdem das Werkstück Wb geklemmt wurde, werden die Halteelemente 101, 102, und somit auch das Werkstück Wb, um 180° gedreht. Nachfolgend werden die Halteelemente 101, 102 voneinander weg bewegt, um das Werkstück Wb wieder frei zu geben.

Das freigegebene Werkstück Wb kann wieder in Richtung der Auflageeinrichtung 15b bewegt werden, um ggf. mit einer weiteren Beschichtung versehen zu werden.

## Patentansprüche

1. Beschichtungsvorrichtung (1, 1a, 1b), insbesondere zum Aufbringen eines Beschichtungsmaterials an einer Breitfläche eines Werkstücks, aufweisend:
eine Auflageeinrichtung (15, 15a, 15b) zum Aufnehmen eines Werkstücks (W, Wa, Wb),
eine Auflegevorrichtung (24, 24a) zum Auflegen eines Beschichtungsmaterials (B, Ba) auf das Werkstück (W, Wa),
eine Presseinrichtung (20, 20a) zum Anpressen des Beschichtungsmaterials an dem an der Auflageeinrichtung (15, 15a, 15b) aufgenommenen Werkstück (W, Wa, Wb),
wobei die Presseinrichtung (20, 20a) zum Anpressen des Beschichtungsmaterials entlang der Auflageeinrichtung (15, 15a, 15b) bewegbar ist,
**dadurch gekennzeichnet, dass**
die Auflegevorrichtung rollbar ist.

2. Beschichtungsvorrichtung (1, 1a) gemäß Anspruch 1, **dadurch gekennzeichnet, dass** die Auflegevorrichtung (24, 24a) in ein Gehäuse (25, 25a) einrollbar ist.

3. Beschichtungsvorrichtung (1, 1a) gemäß einem der vorangegangenen Ansprüche, **dadurch gekennzeichnet, dass** die Presseinrichtung (20, 20a) relativ zur Auflageeinrichtung (15, 15a, 15b) anhebbar und absenkbar ist.

4. Beschichtungsvorrichtung (1, 1a) gemäß einem der vorangegangenen Ansprüche, ferner umfassend eine Haftmittelauftragseinrichtung (10, 10a) zum Auftragen eines Haftmittels am Werkstück (W, Wa).

5. Beschichtungsvorrichtung (1) gemäß Anspruch 4, **dadurch gekennzeichnet, dass** die Haftmittelauftragseinrichtung (10) benachbart zur Auflageeinrichtung (15) angeordnet ist.

6. Beschichtungsvorrichtung (1a) gemäß Anspruch 4, **dadurch gekennzeichnet, dass** die Haftmittelauftragseinrichtung (10a) entlang der Auflageeinrichtung (15a) bewegbar ist.

7. Beschichtungsvorrichtung (1, 1a) gemäß einem der Ansprüche 4-6, **dadurch gekennzeichnet, dass** die Auflegevorrichtung (24, 24a) mit der Haftmittelauftragseinrichtung (10, 10a) und der Presseinrichtung (20, 20a) in Verbindung steht.

8. Beschichtungsvorrichtung (1, 1a) gemäß einem der vorangegangenen Ansprüche, **dadurch gekennzeichnet, dass** die Auflageeinrichtung (15, 15a) eine Fördereinrichtung zum Bewegen des Werkstücks (W, Wa) umfasst.

9. Beschichtungsvorrichtung (1b) gemäß einem der vorangegangenen Ansprüche, ferner umfassend eine Wendevorrichtung (100), die eingerichtet ist, ein Werkstück um 180° zu drehen, wobei die Wendevorrichtung (100) bevorzugt eingerichtet ist, das Werkstück in Richtung der Haftmittelauftragseinrichtung zu bewegen.

10. Verfahren zum Beschichten eines, insbesondere plattenförmigen, Werkstücks (W, Wa, Wb) mit einem Beschichtungsmaterial (B, Ba), insbesondere einer Folie, insbesondere zum Aufbringen eines Beschichtungsmaterials an einer Breitfläche eines Werkstücks, umfassend die Schritte:
Auflegen des Beschichtungsmaterials (B, Ba) auf eine rollbare Auflegevorrichtung (24, 24a), und
Anpressen des Beschichtungsmaterials an dem Werkstück (W, Wa, Wb) mittels einer Presseinrichtung (20, 20a), während die Presseinrichtung (20, 20a) entlang des Werkstücks (W, Wa, Wb) bewegt wird.

11. Verfahren gemäß Anspruch 10, **dadurch gekennzeichnet, dass** die Auflegevorrichtung (24, 24a) mit der Presseinrichtung (20, 20a) in Verbindung steht und während des Bewegens der der Presseinrichtung (20, 20a) in ein Gehäuse eingerollt wird.

12. Verfahren gemäß einem der Ansprüche 10-11, **dadurch gekennzeichnet, dass** vor dem Beschichten des Werkstücks ein Haftmittel am Werkstück (W, Wa, Wb) mittels einer Haftmittelauftragseinrichtung (10, 10a) aufgetragen wird, wobei das Werkstück (W) und/oder die Haftmittelauftragseinrichtung (10a) zum Auftragen des Haftmittels bewegt wird.

13. Verfahren gemäß einem der Ansprüche 10-12, **dadurch gekennzeichnet, dass** das Werkstück zumindest abschnittsweise aus Holz, Holzwerkstoff oder Verbundmaterial gefertigt ist.

14. Verfahren gemäß einem der Ansprüche 10-13, **dadurch gekennzeichnet, dass** das mit dem Beschichtungsmaterial (B, Ba) versehene Werkstück (Wb) um 180° mittels einer Wendevorrichtung (100) gedreht wird.

## Claims

1. Coating device (1, 1a, 1b), in particular for applying a coating material to a broad surface of a workpiece, comprising:
a support apparatus (15, 15a, 15b) for receiving a workpiece (W, Wa, Wb),
a laying device (24, 24a) for laying a coating material (B, Ba) on the workpiece (W, Wa),
a pressing apparatus (20, 20a) for pressing the coating material on the workpiece (W, Wa, Wb) received on the support apparatus (15, 15a, 15b),
the pressing apparatus (20, 20a) being movable along the support apparatus (15, 15a, 15b) in order to press on the coating material,
**characterised in that**
the laying device can be rolled.

2. Coating device (1, 1a) according to claim 1, **characterised in that** the laying device (24, 24a) can be rolled into a housing (25, 25a).

3. Coating device (1, 1a) according to any of the preceding claims, **characterised in that** the pressing apparatus (20, 20a) can be raised and lowered relative to the support apparatus (15, 15a, 15b).

4. Coating device (1, 1a) according to any of the preceding claims, further comprising an adhesive application apparatus (10, 10a) for applying an adhesive to the workpiece (W, Wa).

5. Coating device (1) according to claim 4, **characterised in that** the adhesive application apparatus (10) is arranged adjacent to the support apparatus (15).

6. Coating device (1a) according to claim 4, **characterised in that** the adhesive application apparatus (10a) can be moved along the support apparatus (15a).

7. Coating device (1, 1a) according to any of claims 4 to 6, **characterised in that** the laying device (24, 24a) is connected to the adhesive application apparatus (10, 10a) and the pressing apparatus (20, 20a).

8. Coating device (1, 1a) according to any of the preceding claims, **characterised in that** the support apparatus (15, 15a) comprises a conveying apparatus for moving the workpiece (W, Wa).

9. Coating device (1b) according to any of the preceding claims, further comprising a turning device (100), which is designed to rotate a workpiece by 180°, wherein the turning device (100) is preferably designed to move the workpiece towards the adhesive application apparatus.

10. Method for coating an, in particular planar, workpiece (W, Wa, Wb) with a coating material (B, Ba), in particular a film, in particular for applying a coating material to a broad surface of a workpiece, comprising the steps of:
laying the coating material (B, Ba) on a rollable laying device (24, 24a), and
pressing the coating material on the workpiece (W, Wa, Wb) by means of a pressing apparatus (20, 20a) while the pressing apparatus (20, 20a) is moved along the workpiece (W, Wa, Wb).

11. Method according to claim 10, **characterised in that** the laying device (24, 24a) is connected to the pressing apparatus (20, 20a) and is rolled into a housing while the pressing apparatus (20, 20a) is moved.

12. Method according to any of claims 10 to 11, **characterised in that** an adhesive is applied to the workpiece (W, Wa, Wb) by means of an adhesive application apparatus (10, 10a) before the workpiece is coated, wherein the workpiece (W) and/or the adhesive application apparatus (10a) is moved in order to apply the adhesive.

13. Method according to any of claims 10 to 12, **characterised in that** the workpiece is manufactured at least in portions from wood, wood material or composite material.

14. Method according to any of claims 10 to 13, **characterised in that** the workpiece (Wb) provided with the coating material (B, Ba) is rotated by 180° by means of a turning device (100).

## Revendications

1. Dispositif de revêtement (1, 1a, 1b), en particulier pour l'application d'un matériau de revêtement sur une surface large d'une pièce à usiner, comprenant :
un dispositif de support (15, 15a, 15b) pour recevoir une pièce à usiner (W, Wa, Wb),
un composant d'application (24, 24a) pour appliquer un matériau de revêtement (B, Ba) sur la pièce à usiner (W, Wa),
un dispositif de pression (20, 20a) pour presser le matériau de revêtement contre la pièce à usiner (W, Wa, Wb) reçue sur le dispositif de support (15, 15a, 15b),
dans lequel le dispositif de pression (20, 20a) pour presser le matériau de revêtement est mobile le long du dispositif de support (15, 15a, 15b),
**caractérisé en ce que**
le composant d'application peut rouler.

2. Dispositif de revêtement (1, 1a) selon la revendication 1,
**caractérisé en ce que** le composant d'application (24, 24a) est enroulable dans un boîtier (25, 25a).

3. Dispositif de revêtement (1, 1a) selon l'une quelconque des revendications précédentes, **caractérisé en ce que** le dispositif de pression (20, 20a) peut être soulevé et abaissé par rapport au dispositif de support (15, 15a, 15b).

4. Dispositif de revêtement (1, 1a) selon l'une quelconque des revendications précédentes, comprenant en outre un dispositif d'application d'agent adhésif (10, 10a) pour appliquer un agent adhésif sur la pièce à usiner (W, Wa).

5. Dispositif de revêtement (1) selon la revendication 4, **caractérisé en ce que** le dispositif d'application d'agent adhésif (10) est disposé de manière adjacente au dispositif de support (15).

6. Dispositif de revêtement (1a) selon la revendication 4, **caractérisé en ce que** le dispositif d'application d'agent adhésif (10a) est mobile le long du dispositif de support (15a).

7. Dispositif de revêtement (1, 1a) selon l'une quelconque des revendications 4 à 6, **caractérisé en ce que** le composant d'application (24, 24a) est en contact avec le dispositif d'application d'agent adhésif (10, 10a) et le dispositif de pression (20, 20a).

8. Dispositif de revêtement (1, 1a) selon l'une quelconque des revendications précédentes, **caractérisé en ce que** le dispositif de support (15, 15a) comprend un dispositif de transport pour déplacer la pièce à usiner (W, Wa).

9. Dispositif de revêtement (1b) selon l'une quelconque des revendications précédentes, comprenant en outre un composant de rotation (100) conçu pour faire tourner une pièce à usiner à 180°, le composant de rotation (100) étant de préférence conçu pour déplacer la pièce à usiner en direction du dispositif d'application d'agent adhésif.

10. Procédé de revêtement d'une pièce à usiner (W, Wa, Wb), en particulier en forme de plaque, avec un matériau de revêtement (B, Ba), en particulier un film, en particulier pour l'application d'un matériau de revêtement sur une surface large d'une pièce à usiner, comprenant les étapes consistant à :
appliquer le matériau de revêtement (B, Ba) sur un composant d'application (24, 24a) qui peut rouler, et
presser le matériau de revêtement contre la pièce à usiner (W, Wa, Wb) au moyen d'un dispositif de pression (20, 20a), pendant que le dispositif de pression (20, 20a) est déplacé le long de la pièce à usiner (W, Wa, Wb).

11. Procédé selon la revendication 10, **caractérisé en ce que** le composant d'application (24, 24a) est en contact avec le dispositif de pression (20, 20a) et est enroulé dans un boîtier pendant le déplacement du dispositif de pression (20, 20a).

12. Procédé selon l'une quelconque des revendications 10 et 11, **caractérisé en ce que**, avant le revêtement de la pièce à usiner, un agent adhésif est appliqué sur la pièce à usiner (W, Wa, Wb) au moyen d'un dispositif d'application d'agent adhésif (10, 10a), dans lequel la pièce à usiner (W) et/ou le dispositif d'application d'agent adhésif (10a) est déplacé pour l'application de l'agent adhésif.

13. Procédé selon l'une quelconque des revendications 10 à 12, **caractérisé en ce que** la pièce à usiner est fabriquée au moins par sections en bois, en matériau dérivé du bois ou en matériau composite.

14. Procédé selon l'une quelconque des revendications 10 à 13, **caractérisé en ce que** la pièce à usiner (Wb) pourvue du matériau de revêtement (B, Ba) est tournée à 180° au moyen d'un composant de rotation (100).
